# EUROPEAN PATENT APPLICATION

(11) **EP 4 753 005 A1**
(43) Date of publication of application: **03.06.2026**
(21) Application number: 24863239.0
(22) Date of filing: 06.09.2024
(51) Int. Cl.: H01M 10/0566, H01M 50/166, H01M 50/169, H01M 50/148, H01M 50/531, H01M 10/058, H01M 50/375

(54) **SECONDARY BATTERY AND METHOD FOR MANUFACTURING SECONDARY BATTERY**

(30) Priority: 06.09.2023 KR 20230118454
(71) Applicant: LG Energy Solution, Ltd., Seoul 07335 (KR)
(72) Inventor: WON, Sang Yeon, Daejeon 34122 (KR); KIM, Ji Hyun, Daejeon 34122 (KR)
(74) Representative: Goddar, Heinz J.
(86) International application number: PCT/KR2024/013462
(87) International publication number: WO 2025/053660

(57) **Abstract**

The present invention relates to a secondary battery and a method for manufacturing the secondary battery, and more particularly, to a secondary battery, in which a liquefied gas electrolyte that is prepared by liquefying a gaseous electrolyte at a high pressure is utilized to improve impregnation properties with an active material compared to the existing electrolyte, thereby designing and implementing a high-output battery, and low-temperature performance compared to the general electrolyte is easily secured and more easily and efficiently implemented compared to the conventional electrolyte, and a method for manufacturing the secondary battery.

## Description

### TECHNICAL FIELD

### CROSS-REFERENCE TO RELATED APPLICATION

The present application claims the benefit of the priority of Korean Patent Application No. 10-2023-0118454, filed on September 6, 2023, which is hereby incorporated by reference in its entirety.

### TECHNICAL FIELD

The present invention relates to a secondary battery and a method for manufacturing the secondary battery, and more particularly, to a secondary battery, in which a liquefied gas electrolyte that is prepared by liquefying a gaseous electrolyte at a high pressure is utilized to improve impregnation properties with an active material compared to the existing electrolyte, thereby designing and implementing a high-output battery, and low-temperature performance compared to the general electrolyte is easily secured and more easily and efficiently implemented compared to the conventional electrolyte, and a method for manufacturing the secondary battery.

### BACKGROUND ART

Secondary batteries are classified into cylindrical and prismatic batteries, in which an electrode assembly is built in a cylindrical or prismatic metal can, and pouch-type batteries, in which an electrode assembly is built in a pouch-type case made of an aluminum laminate sheet, depending on the shapes of the battery cases.

In addition, the electrode assembly built into the battery case may be a power generation element that is chargeable and dischargeable and be classified into a jelly roll-type electrode assembly having a structure in which a separator is interposed between long sheet-shaped positive and negative electrodes coated with an active material and then is wound, a stacked type electrode assembly having a structure in which a plurality of positive and negative electrodes, each of which has a predetermined size, are sequentially stacked with a separator therebetween, and a stack and folding type electrode assembly having a structure in which bicells or full cells are wound by stacking positive and negative electrodes, each of which is provided into a predetermined radical unit, with a separator therebetween are wound.

Among them, the jelly roll-type electrode assembly is widely manufactured because the jelly roll-type electrode assembly is easy to be manufactured and have an advantage of high energy density per weight. The jelly roll-type electrode assembly may be manufactured by assembling a stack, in which long sheet-shaped positive and negative electrodes with a separator therebetween are provided, and winding the stack in a longitudinal direction of the sheet in a state in which a core is in contact with one end of the electrode stack. In addition, the jelly roll-type electrode assembly may be inserted into a battery case provided as a metal can to form the cylindrical secondary battery.

The cylindrical secondary battery is designed with high energy density, and due to the increasing energy density, the lithium secondary battery requires a high level of stability, and thus, the demand for the cylindrical battery is also increasing.

In the conventional cylindrical secondary batteries, a liquid electrolyte is inserted into a battery case together with an electrode assembly. The electrolyte is a substance which is chemically ionized into cations and anions in water or a polar solvent, and of which a solution exhibits conductivity. The electrolyte is usually injected into a can case in a liquid state. However, a degree to which the liquid electrolyte is impregnated into the electrodes has a limitation in impregnation to limit the implementation of the high-output battery. In addition, the secondary battery generates heat therein during the manufacturing and use, and thus, low-temperature performance is required to cool the high temperature. The conventional liquid electrolyte also has a limitation in terms of the low-temperature performance. Thus, the use of the liquefied gas electrolyte, which is the gaseous electrolyte liquefied at the high pressure, has become an issue. However, since the liquefied gas electrolyte is not easy to handle or use at normal room temperature and pressure conditions, research on easier and more efficient methods is needed.

### DISCLOSURE OF THE INVENTION

### TECHNICAL PROBLEM

The present invention has been invented to solve the above problems, and an object of the present invention is to provide a secondary battery, in which a liquefied gas electrolyte that is prepared by liquefying a gaseous electrolyte at a high pressure is utilized to improve impregnation properties with an active material compared to the existing electrolyte, thereby designing and implementing a high-output battery, and low-temperature performance compared to the general electrolyte is easily secured and more easily and efficiently implemented compared to the conventional electrolyte, and a method for manufacturing the secondary battery.

### TECHNICAL SOLUTION

A secondary battery according to the present invention includes: an electrode assembly comprising a positive electrode, a separator, and a negative electrode; a case in which the electrode assembly is accommodated; and a liquefied gas electrolyte accommodated in the case together with the electrode assembly, wherein the case includes: a body including a sidewall disposed at a side portion of the electrode assembly and a hook part extending inward from an upper end of the sidewall at a predetermined angle with respect to the sidewall, wherein an upper opening is defined inside the hook part, and a lower opening is defined below the sidewall; a top cap unit coupled to the upper opening of the body; and a bottom unit coupled to the lower opening of the body, wherein, as the top cap unit is pressed outward by an internal pressure of the case, which is generated by the liquefied gas electrolyte, the top cap unit is hooked on the hook part and sealed and coupled to the upper opening.

The bottom unit may be coupled to the lower opening of the body by welding.

The top cap unit may include: a protrusion inserted into the upper opening of the body; and an edge extension part that is a portion extending from a perimeter of the protrusion toward the sidewall and hooked on the hook part.

The edge extension part may extend from a lower perimeter of the protrusion toward the sidewall.

As the top cap unit is pressed outward by the internal pressure of the case, which is generated by the liquefied gas electrolyte, the edge extension part may be in close contact with the hook part.

A positive electrode tab connected to the positive electrode may be electrically connected to the top cap unit, and a negative electrode tab connected to the negative electrode may be electrically connected to the bottom unit.

A method for manufacturing the above-described secondary battery according to the present invention includes: an electrode tab connection process of electrically connecting a positive electrode tab connected to the positive electrode of the electrode assembly to the top cap unit and electrically connecting a negative electrode tab connected to the negative electrode to the bottom unit; an electrode assembly accommodation process of coupling the top cap unit to the upper opening of the body and accommodating the electrode assembly in an internal space of the body; a bottom unit coupling process of coupling the bottom unit to the lower opening of the body; an electrolyte injection process of injecting the liquefied gas electrolyte into the internal space of the body; and a sealing coupling process, in which as the top cap unit is pressed outward by the internal pressure of the case, which is generated by the liquefied gas electrolyte, the top cap unit is hooked on the hook part and sealed and coupled to the upper opening.

The top cap unit may include: a protrusion inserted into the upper opening of the body; and an edge extension part that is a portion extending from a perimeter of the protrusion toward the sidewall and hooked on the hook part, and in the electrolyte injection process, in a state in which the edge extension part and the hook part are spaced apart from each other, the liquefied gas electrolyte may be injected into the internal space of the body through a spaced space between the edge extension part and the hook part.

In the sealing coupling process, as the top cap unit is pressed outward by the internal pressure of the case, which is generated by the liquefied gas electrolyte, the edge extension part may be in close contact with the hook part so that the top cap unit is sealed and coupled to the upper opening.

The secondary battery may further include a venting unit coupled to the top cap unit and configured to discharge an internal gas of the case to the outside of the case when an internal temperature of the case is equal to or greater than a critical temperature.

The venting unit may include: a base part disposed on a surface facing the hook part on a surface of the edge extension part; and a variable part installed to face the hook part on the base part and changed in shape at the critical temperature or more.

The variable part may include a metal layer-bonded body in which a first metal layer stacked on the base part and a second metal layer stacked on the first metal layer to face a hook part and having a thermal expansion coefficient different from that of the first metal layer are bonded to each other.

The metal layer-bonded body may have one portion fixed to the base part and the other portion configured to press the hook part that is changed in shape at the critical temperature or more, wherein force by which the hook part is pressed by the other portion of the metal layer-bonded body at the critical temperature or more may be greater than force by which the top cap unit is pressed outward by the internal pressure of the case, which is generated by the liquefied gas electrolyte.

When the other portion of the metal layer-bonded body presses the hook part, the edge extension part may be spaced apart from the hook part to define a spaced space, wherein the internal gas of the case may be discharged to the outside of the case through the spaced space.

The base part may be provided in a circular plate shape having a through-hole therein, wherein the protrusion of the top cap unit may be inserted into the through-hole.

The variable part may have a shape corresponding to the base part, and the metal layer-bonded body may be provided in four at an interval of 90 degrees on the base part.

### ADVANTAGEOUS EFFECTS

The present invention relates to the secondary battery and the method for manufacturing the secondary battery, and more particularly, to the secondary battery, in which the liquefied gas electrolyte that is prepared by liquefying the gaseous electrolyte at the high pressure is utilized to improve the impregnation properties with the active material compared to the existing electrolyte, thereby designing and implementing the high-output battery, and the low-temperature performance compared to the general electrolyte is easily secured and more easily and efficiently implemented compared to the conventional electrolyte, and the method for manufacturing the secondary battery.

### BRIEF DESCRIPTION OF THE DRAWINGS

FIG. 1 is a cross-sectional view of a secondary battery according to Embodiment 1 of the present invention.
FIG. 2 is an exploded perspective view of the secondary battery of FIG. 1.
FIG. 3 is a diagram illustrating a method for manufacturing a secondary battery according to Embodiment 2 of the present invention.
FIG. 4 is a cross-sectional view illustrating an electrode tab connection process in the method for manufacturing the secondary battery according to Embodiment 2 of the present invention.
FIG. 5 is a cross-sectional view illustrating an electrode accommodation process and a bottom unit coupling process in the method for manufacturing the secondary battery according to Embodiment 2 of the present invention.
FIG. 6 is a cross-sectional view illustrating an electrolyte injection process in the method for manufacturing the secondary battery according to Embodiment 2 of the present invention.
FIG. 7 is a cross-sectional view illustrating a sealing coupling process in the method for manufacturing the secondary battery according to Embodiment 2 of the present invention.
FIG. 8 is a cross-sectional view of a secondary battery according to Embodiment 3 of the present invention.
FIG. 9 is a view illustrating a state in which a venting unit is not changed in shape in the secondary battery according to Embodiment 3 of the present invention.
FIG. 10 is a view illustrating a state in which the venting unit of FIG. 9 is changed in shape at a critical temperature or more.
FIG. 11 is a cross-sectional view illustrating a state in which an internal gas of the secondary battery is discharged to the outside of a case at the critical temperature or more according to Embodiment 3 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Embodiment 1

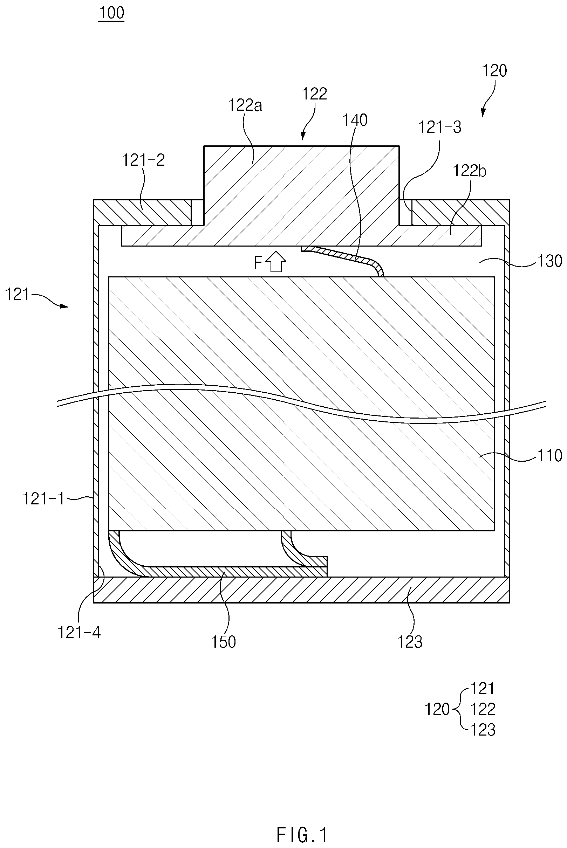

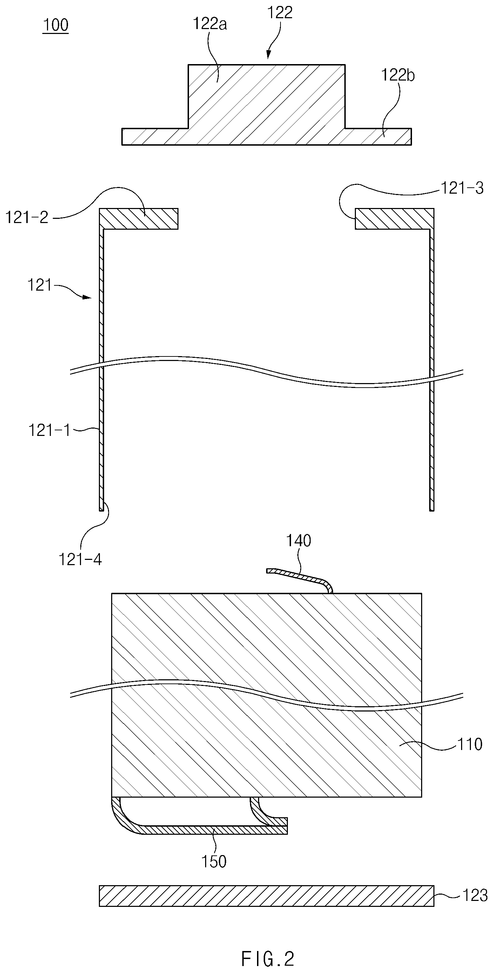

FIG. 1 is a cross-sectional view of a secondary battery according to Embodiment 1 of the present invention. FIG. 2 is an exploded perspective view of the secondary battery of FIG. 1.

Hereinafter, a secondary battery 100 according to Embodiment 1 of the present invention will be described with reference to FIGS. 1 to 2.

The secondary battery 100 according to Embodiment 1 of the present invention includes an electrode assembly 110, a case 120, and a liquefied gas electrolyte 130.

The electrode assembly 110 may be provided by alternately disposing a positive electrode, a separator, and a negative electrode. The electrode assembly 110 may be a jelly roll-type electrode assembly 110 having a shape in which the electrodes and the separators are alternately disposed to be wound. The electrode assembly 110 may be an electrode winding body in which one or more positive electrodes, one or more negative electrodes, and one or more separators are wound around each other.

The case 120 may have a configuration in which the electrode assembly 110 is accommodated. The case 120 may have an internal space, and the electrode assembly 110 may be vertically inserted into the internal space. The vertical insertion may mean that the electrode assembly 110 is inserted so that a winding axis of the electrode assembly 110 is perpendicular to a bottom surface of the case 120.

The electrolyte may be accommodated in the case 120 together with the electrode assembly 110. In the present invention, the liquefied gas electrolyte 130 different from a conventional liquid electrolyte may be used as an electrolyte composition. The liquefied gas electrolyte 130 may refer to an electrolyte in a state in which the gaseous electrolyte is liquefied at a high pressure.

Referring to FIG. 2, the case 120 may include a body 121, a top cap unit 122, and a bottom unit 123.

First, the body 121 may include a sidewall 121-1 and a hook part 121-2. The sidewall 121-1 may be configured to be disposed on a side portion of the electrode assembly 110. The hook part 121-2 may be configured to extend inward from an upper end of the sidewall 121-1 at a predetermined angle with respect to the sidewall 121-1. In FIG. 1, the sidewall 121-1 and the hook part 121-2 are illustrated to be angled at an angle of 90 degrees. The hook part 121-2 may be bent or folded from the sidewall 121-1. It may be manufactured through various methods including pressing, casting, forging, rolling, and injection molding. The case 120 may be made of a can material.

An upper opening 121-3 may be defined inside the hook part 121-2. The upper opening 121-3 may be machined to be punched. That is, the upper opening may be a hole punched by a punch. In addition, a lower opening 121-4 may be defined below the sidewall 121-1. The electrode assembly 110 may be inserted into the lower opening 121-4 as described later.

Referring to FIGS. 1 and 2, the top cap unit 122 may be configured to be coupled to the upper opening 121-3 of the body 121. The top cap unit 122 may include a protrusion 122a and an edge extension part 122b. The protrusion 122a may be a portion inserted into the upper opening 121-3 of the body 121. The edge extension part 122b may be a portion that extends from a perimeter of the protrusion 122a toward the sidewall 121-1 and is hooked on the hook part 121-2. The edge extension part 122b may be configured to extend from a lower perimeter of the protrusion 122a toward the sidewall 121-1. Due to this shape, the edge extension part 122b may be effectively hooked on the hook part 121-2 of the body 121 and may also be supported by the hook part 121-2. This may prevent the top cap unit 122 from being separated from the body 121.

The bottom unit 123 may be configured to be coupled to the lower opening 121-4 of the body 121. The bottom unit 123 may be coupled to the lower opening 121-4 of the body 121 by welding. When coupled by the welding in this manner, the bottom unit 123 may seal a lower portion of the body 121. Thus, the electrolyte or the internal gas may not escape from a lower side of the body 121.

Referring to FIG. 1, in the secondary battery 100 according to Embodiment 1 of the present invention, the top cap unit 122 may be pressed outward by an internal pressure of the case 120, which is generated by the liquefied gas electrolyte 130 (see an arrow F in FIG. 1). When the top cap unit 122 is pressed outward by the internal pressure of the case 120, which is generated by the liquefied gas electrolyte 130, the edge extension part 122b may be in close contact with the hook part 121-2. As described above, the top cap unit 122 may be hooked on the hook part 121-2 and coupled to be in close contact with the upper opening 121-3. In addition, the sealing of the battery may be achieved through this configuration.

In the secondary battery 100 according to Embodiment 1 of the present invention, which is manufactured in this manner, the liquefied gas electrolyte that is prepared by liquefying the gaseous electrolyte at a high pressure may be utilized to improve impregnation properties with the active material compared to the existing electrolyte, thereby designing and implementing the high-output battery. In addition, since the liquefied gas electrolyte 130 is used, low temperature performance may be more easily secured compared to the general electrolyte.

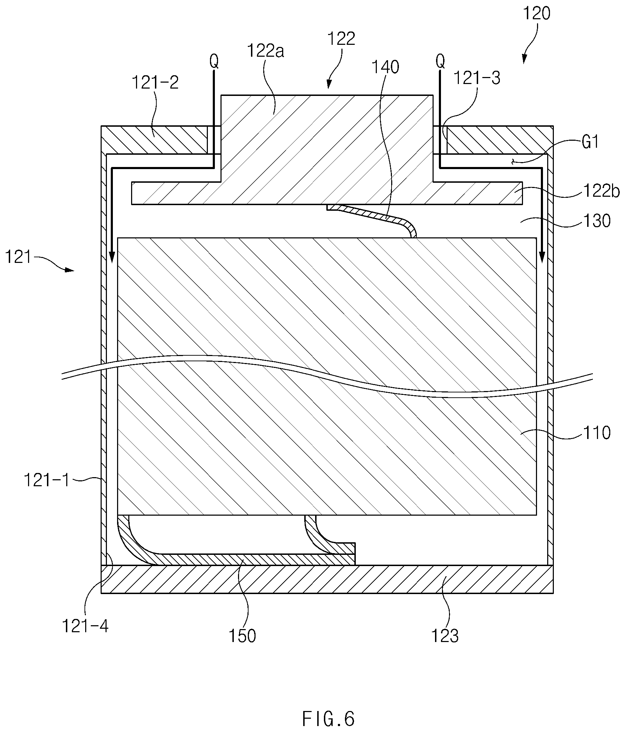

In the secondary battery 100 according to Embodiment 1 of the present invention, which is described above, if the top cap unit 122 descends further in the state illustrated in FIG. 1, and thus, the hook part 121-2 of the body 121 and the edge extension part 122b of the top cap unit 122 are spaced apart from each other, a spaced space (see G1 of FIG. 6) between the hook part 121-2 of the body 121 and the edge extension part 122b of the top cap unit 122 may be defined. In addition, the internal gas and the electrolyte may be discharged through the spaced space. That is, the internal gas or the vaporized electrolyte may pass through the spaced space between the hook part 121-2 of the body 121 and the edge extension part 122b of the top cap unit 122 and then may pass through the upper opening 121-3 of the body 121 and be discharged outside the case 120.

However, since the internal pressure of the case 120, which is generated by the liquefied gas electrolyte 130, strongly presses F the top cap unit 122 upward, the edge extension part 122b may be in close contact with the hook part 121-2, and thus, the spaced space may be defined between the edge extension part 122b and the hook part 121-2. As a result, the secondary battery using the liquefied gas electrolyte 130 may be implemented more simply and efficiently than the conventional secondary battery.

In the secondary battery 100 according to Embodiment 1 of the present invention, a positive electrode tab 140 connected to the positive electrode of the electrode assembly 110 may be electrically connected to the top cap unit 122. In addition, the negative electrode tab 150 connected to the negative electrode of the electrode assembly 110 may be electrically connected to the bottom unit 123. As a result, an upper end of the protrusion 122a of the upper top cap unit 122 may serve as a positive electrode terminal. In addition, a lower surface of the bottom unit 123 may serve as a negative electrode terminal.

### Embodiment 2

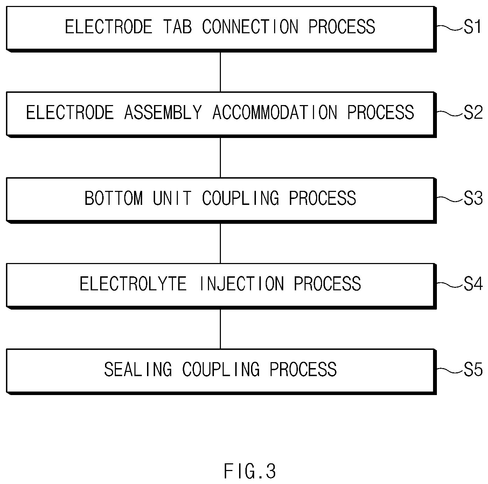

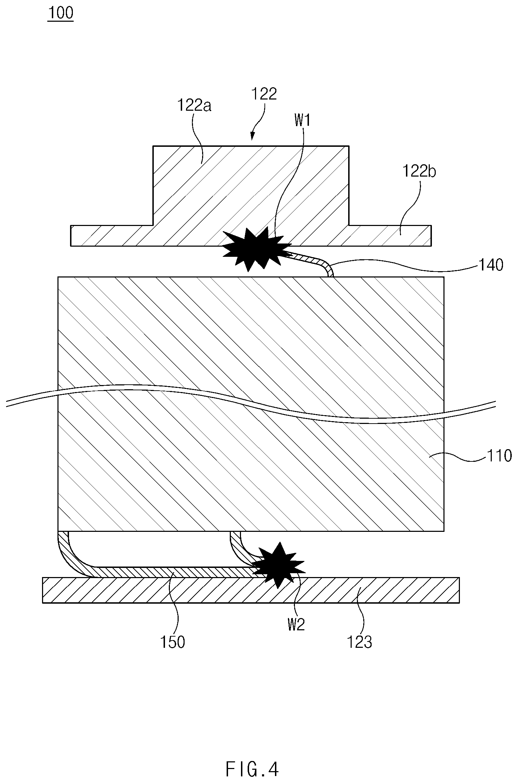

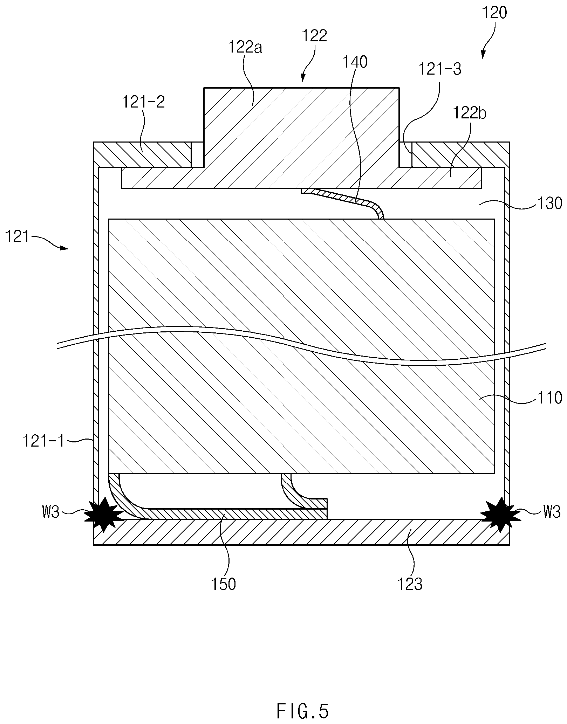

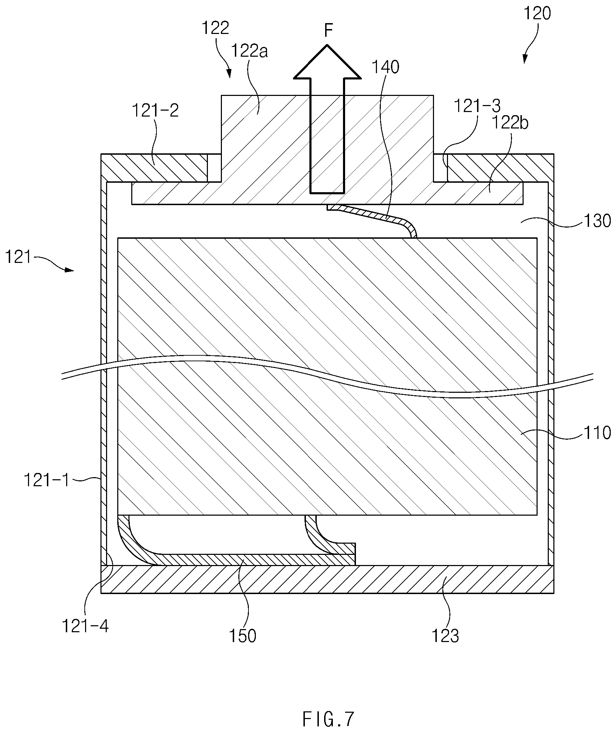

FIG. 3 is a diagram illustrating a method for manufacturing a secondary battery according to Embodiment 2 of the present invention. FIG. 4 is a cross-sectional view illustrating an electrode tab connection process in the method for manufacturing the secondary battery according to Embodiment 2 of the present invention. FIG. 5 is a cross-sectional view illustrating an electrode accommodation process and a bottom unit coupling process in the method for manufacturing the secondary battery according to Embodiment 2 of the present invention. FIG. 6 is a cross-sectional view illustrating an electrolyte injection process in the method for manufacturing the secondary battery according to Embodiment 2 of the present invention. FIG. 7 is a cross-sectional view illustrating a sealing coupling process in the method for manufacturing the secondary battery according to Embodiment 2 of the present invention.

Embodiment 2 of the present invention may be different from Embodiment 1 in that it relates to a method for manufacturing the secondary battery according to Embodiment 1 of the present invention.

Contents in common with Embodiment 1 will be omitted as much as possible, and Embodiment 2 will be described. That is, it is obvious that if content that is not described in Embodiment 2 is needed, it may be regarded as the content of Embodiment 1.

Referring to FIG. 3, a method for manufacturing a secondary battery according to Embodiment 2 of the present invention may include an electrode tab connection process (S1), an electrode assembly accommodation process (S2), a bottom unit coupling process (S3), an electrolyte injection process (S4), and a sealing coupling process (S5).

First, referring to FIG. 4, the electrode tab connection process (S1) may be a process of connecting a positive electrode tab 140 and a negative electrode tab 150 to an electrode assembly 110 formed by winding a positive electrode, a separator, and a negative electrode. Particularly, the positive electrode tab 140 connected to the positive electrode of the electrode assembly 110 may be electrically connected to a bottom surface of a top cap unit 122. This connection may be performed by welding (see W1). In addition, the negative electrode tab 150 connected to the negative electrode of the electrode assembly 110 may be electrically connected to a top surface of a bottom unit 123. This connection may also be performed by welding (see W2). Due to this connection, an upper portion of a protrusion 122a of the top cap unit 122 in the secondary battery, which is completed later, may become a positive electrode terminal, and a lower portion of the bottom unit 123 may become a negative electrode terminal.

Referring to FIG. 5, the electrode assembly accommodation process (S2) may be a process of accommodating an assembly of the electrode assembly 110, the top cap unit 122, and the bottom unit 123, which is manufactured through the electrode tab connection process (S1), into the body 121 of the secondary battery case 120. That is, while allowing the assembly of the electrode assembly 110, the top cap unit 122, and the bottom unit 123, which is disposed below the body 121, to move upward, the assembly of the electrode assembly 110, the top cap unit 122, and the bottom unit 123 may be inserted into the body 121 through a lower opening 121-4. Here, the top cap unit 122 may be coupled to an upper opening 121-3 of the body 121, and the electrode assembly 110 may be accommodated in an internal space of the body 121. That is, the assembly of the electrode assembly 110, the top cap unit 122, and the bottom unit 123 may be accommodated within the body 121 by inserting the protrusion 122a of the top cap unit 122 into the upper opening 121-3 of the body 121.

The bottom unit coupling process (S3) may be a process of coupling the bottom unit 123 to the lower opening 121-4 of the body 121 after the assembly of the electrode assembly 110, the top cap unit 122, and the bottom unit 123 is inserted and accommodated into the body 121. The process of coupling the bottom unit 123 to the lower opening 121-4 of the body 121 may be performed by welding (W3). When coupled by the welding in this manner, the bottom unit 123 may seal a lower portion of the body 121. Thus, the electrolyte or the internal gas may not escape from a lower side of the body 121.

Referring to FIG. 6, the electrolyte injection process (S4) may be a process of injecting a liquefied gas electrolyte 130 into the internal space of the body 121. The liquefied gas electrolyte 130 may be an electrolyte in which a gaseous electrolyte is liquefied at a high pressure.

The top cap unit 122 may include the protrusion 122a and the edge extension part 122b as described above, and in the electrolyte injection process (S4), the liquefied gas electrolyte 130 may be injected into the internal space of the body 121 through a spaced space G1 between the edge extension part 122b and the hook part 121-2 in a state in which the edge extension part 122b and the hook part 121-2 are spaced apart from each other. That is, when the top cap unit 122 is slightly pressed downward as illustrated in FIG. 6, the spaced space G1 may be formed between the edge extension part 122b and the hook part 121-2. In this state, the liquefied gas electrolyte 130 may be injected into the body 121 of the case 120 while passing through the spaced space between the protrusion 122a and the upper opening 121-3 of the body 121 and the spaced space G1 between the hook part 121-2 and the edge extension part 122b (see Q of FIG. 6). The liquefied gas electrolyte 130 is injected in a liquid state when injected into the body 121, but after being injected into the body 121, some of the electrolyte 130 may be quickly vaporized due to a pressure difference, and thus, the above-described operation, the internal pressure of the body 121 may increase.

Referring to FIG. 7, the sealing coupling process (S5) may be a process in which, after the electrolyte injection process (S4), the top cap unit 122 is pressed (see an arrow F in FIG. 7) outward by the internal pressure of the case 120, which is formed by the liquefied gas electrolyte 130, and thus, the top cap unit 122 may be hooked on the hook part 121-2 and then sealed and coupled to the upper opening 121-3.

Particularly, in the sealed coupling process (S5), as the top cap unit 122 is pressed (F) outward by the internal pressure of the case 120, which is formed by the liquefied gas electrolyte 130, the edge extension part 122b may be in close contact with the hook part 121-2. When being in close contact with the hook part 121-2, the internal electrolyte and other internal gases may not be discharged to the outside of the case 120, and thus, the top cap unit 122 may be sealed and coupled to the upper opening 121-3 of the body 121.

The secondary battery 100 according to Embodiment 1 described above may be manufactured by the method for manufacturing the secondary battery according to Embodiment 2 of the present invention described above. Therefore, in the method for manufacturing the secondary battery according to Embodiment 2 of the present invention, the liquefied gas electrolyte that is prepared by liquefying the gaseous electrolyte at the high pressure may be utilized to improve the impregnation properties with the active material compared to the existing electrolyte, thereby designing and implementing the high-output battery.

In addition, in the secondary battery 100 implemented by the method for manufacturing the secondary battery according to Embodiment 2 of the present invention, the low-temperature performance may be more easily secured compared to the general electrolyte. In addition, the method for manufacturing the secondary battery according to Embodiment 2 of the present invention may implement the advanced secondary battery that is more simply and efficiently than the conventional secondary battery.

### Embodiment 3

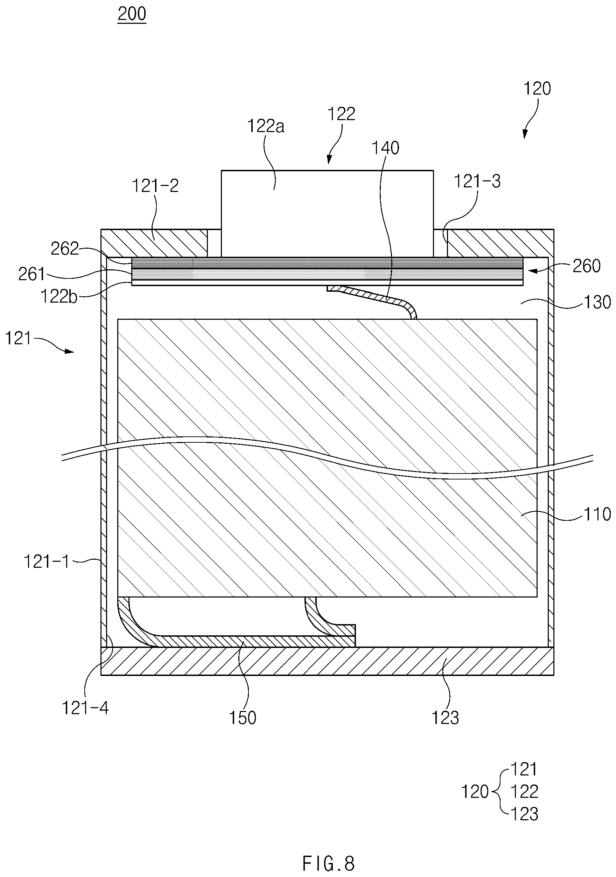

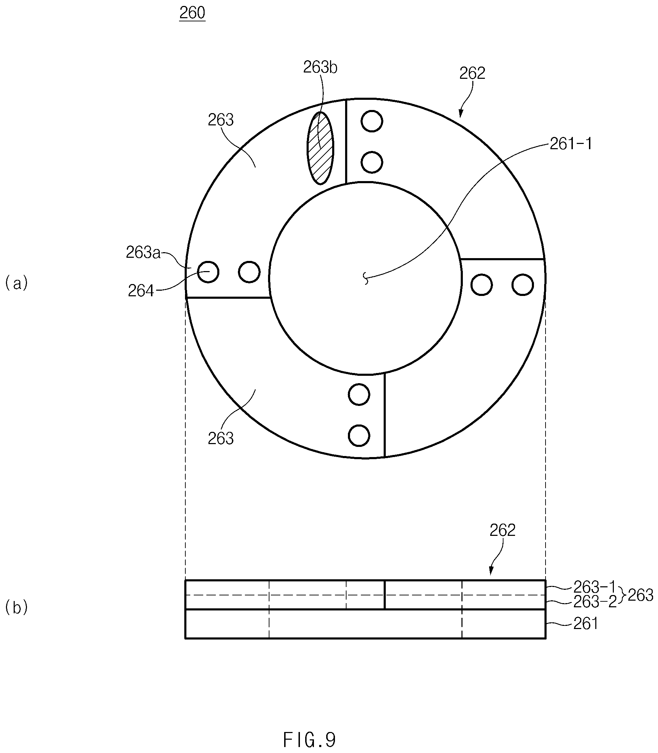

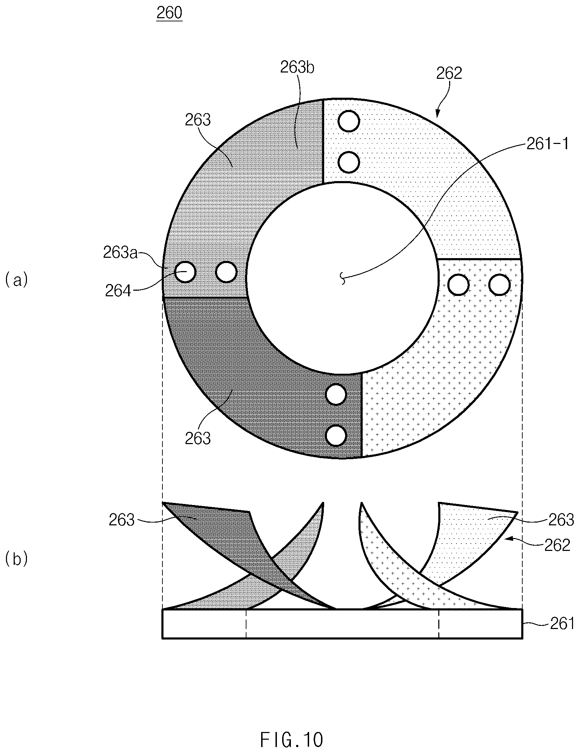

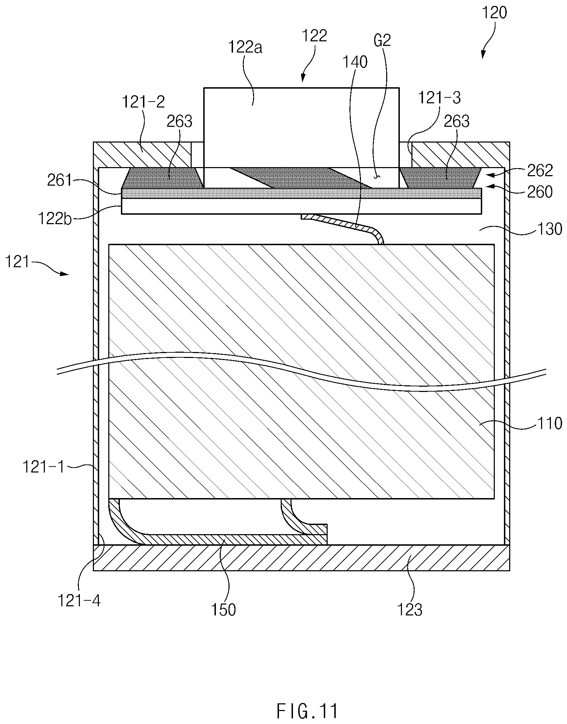

FIG. 8 is a cross-sectional view of a secondary battery according to Embodiment 3 of the present invention. FIG. 9 is a view illustrating a state in which a venting unit 260 is not changed in shape in the secondary battery according to Embodiment 3 of the present invention. FIG. 10 is a view illustrating a state in which the venting unit 260 of FIG. 9 is changed in shape at a critical temperature or more. FIG. 11 is a cross-sectional view illustrating a state in which an internal gas of the secondary battery is discharged to the outside of a case at the critical temperature or more according to Embodiment 3 of the present invention.

Embodiment 3 of the present invention may be different from Embodiments 1 and 2 in that it further includes a venting unit 260 compared to the secondary battery and the method for manufacturing the secondary battery according to Embodiments 1 and 2 of the present invention.

Contents in common with Embodiments 1 and 2 will be omitted as much as possible, and Embodiment 3 will be described. That is, it is obvious that if content that is not described in Embodiment 3 is needed, it may be regarded as the content of Embodiments 1 and 2.

Referring to FIG. 8, a secondary battery 200 according to Embodiment 3 of the present invention may further include a venting unit 260 configured to discharge an internal gas in the form of the secondary battery according to Embodiment 1. The venting unit 260 may be coupled to a top cap unit 122 and configured to discharge an internal gas of a case 120 to the outside of the case 120 when an internal temperature of the case 120 becomes higher than a critical temperature.

Referring to FIGS. 8 to 10, the venting unit 260 may include a base part 261 and a variable part 262. The base part 261 may be a portion disposed on a surface of an edge extension part 122b facing a hook part 121-2. The variable part 262 may be installed on the base part 261 to face the hook part 121-2. The venting unit 260 may have a shape like a washer before the shape of the variable part 262 is changed.

The variable part 262 may be a portion of which a shape is changed at a critical temperature or more. When the variable part 262 is changed in shape at the critical temperature or more, seal between the edge extension part 122b of the top cap unit 122 and the hook part 121-2 of the body 121 may be released. Thus, an internal gas generated inside the body 121 may be discharged outside the battery case 120. This may prevent the secondary battery from being ignited or exploded due to the internal gas pressure generated at the high temperature.

The base part 261 may be provided in a disc shape having a through-hole 261-1 defined therein. The base part 261 may have a shape corresponding to the edge extension part 122b in the top cap unit 122. In addition, the base part 261 may be disposed to overlap the border extension part 122b. For this, the protrusion 122a of the top cap unit 122 may be inserted into the through-hole 261-1 of the base part 261.

FIG. 9(a) is a plan view of the venting unit 260, and FIG. 9(b) is a front view of the venting unit 260 illustrated in FIG. 9(a). FIGS. 9(a) and 9(b) illustrate a state in which the shape of the variable part 262 in the venting unit 260 is not changed.

FIG. 10(a) is a plan view of the venting unit 260, and FIG. 10(b) is a front view of the venting unit 260 illustrated in FIG. 10(a). FIG. 10 illustrates a state in which the shape of the variable part 262 is changed.

Referring to FIGS. 9 and 10, the variable part 262 may be configured to be changed in shape when the temperature rises based on a bimetallic principle formed by bonding two metals having different thermal expansion rates. Particularly, the variable part 262 may include a metal layer-bonded body 263 in which a first metal layer 263-1 stacked on a base part 261 and a second metal layer 263-2 stacked on the first metal layer 263-1 to face a hook part 121-2 are bonded to each other.

Here, the second metal layer 263-2 may be made of a metal having a different thermal expansion coefficient from that of the first metal layer 263-1. For example, the thermal expansion coefficient of the second metal layer 263-2 may be greater than that of the first metal layer 263-1. Thus, the metal layer-bonded body 263 may be bent in a direction of the first metal layer 263-1.

The variable part 262 may be provided in a shape corresponding to the base part 261. The metal layer joint 263 of the variable part 262 may be referred to as a type of bimetal placed on the base part 261. Four metal layer-bonded bodies 263 may be disposed at an interval of 90 degrees on the base part 261. The metal layer-bonded body 263 may have one portion 263a fixed on the base 261 and the other portion 263b that is changed in shape at a critical temperature or more to press the hook part 121-2. The one portion 263a of the metal layer-bonded body 263, which is fixed on the base part 261, may be fixed on the base part 261 by a fixing member 264. The fixing member 264 may be a bolt, a rivet, etc.

FIG. 11 illustrates a state in which the shape of the variable part is changed, and the internal gas is vented in a state in which the venting unit 260 is mounted on the secondary battery 200 according to Embodiment 3 of the present invention. Referring to FIGS. 10 and 11, force by which the hook part 121-2 is pressed by the other portion 263b of the metal layer-bonded body 263 at the critical temperature or more may be greater than force F by which the top cap unit 122 is pressed outward by the internal pressure of the case 120, which is generated by the liquefied gas electrolyte 130. Thus, when the other portion 263b of the metal layer joint 263 presses the hook part 121-2, the edge extension part 122b may be spaced downward from the hook part 121-2 to define a spaced space G2. In addition, the internal gas of the case 120 may be discharged to the outside of the case 120 through the spaced space defined in this manner.

As a result, the high-output secondary battery having the high the impregnation properties with the active material and the secondary battery that is capable of more easily securing the low temperature performance may be more easily and efficiently implemented and also may be more safely used.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

100, 200: Secondary battery
110: Electrode assembly (110)
120: Casing (120)
121: Body (121)
121-1: Sidewall (121-1)
121-2: Hook part
121-3: Upper opening
121-4: Lower opening
122: Top cap unit
122a: Protrusion
122b: Edge extension part
123: Bottom unit
130: Liquefied gas electrolyte
140: Positive electrode tab
150: Negative electrode tab
260: Venting unit
261: Base part
261-1: Through-hole
262: Variable part
263: Metal layer-bonded body
263-1: First metal layer
263-2: Second metal layer
263a: One portion
263b: The other portion
264: Fixing member
S1: Electrode tab connection process
S2: Electrode assembly (110) accommodation process
S3: Bottom unit coupling process
S4: Electrolyte injection process
S5: Sealing coupling process.

## Claims

1. A secondary battery comprising:
an electrode assembly comprising a positive electrode, a separator, and a negative electrode;
a case (120) in which the electrode assembly is accommodated; and
a liquefied gas electrolyte accommodated in the case (120) together with the electrode assembly,
wherein the case (120) comprises:
a body (121) comprising a sidewall (121-1) disposed at a side portion of the electrode assembly and a hook part extending inward from an upper end of the sidewall (121-1) at a predetermined angle with respect to the sidewall (121-1), wherein an upper opening is defined inside the hook part, and a lower opening is defined below the sidewall (121-1);
a top cap unit coupled to the upper opening of the body (121); and
a bottom unit coupled to the lower opening of the body (121),
wherein, as the top cap unit is pressed outward by an internal pressure of the case (120), which is generated by the liquefied gas electrolyte, the top cap unit is hooked on the hook part and sealed and coupled to the upper opening.

2. The secondary battery of claim 1, wherein the bottom unit is coupled to the lower opening of the body (121) by welding.

3. The secondary battery of claim 1, wherein the top cap unit comprises:
a protrusion inserted into the upper opening of the body (121); and
an edge extension part that is a portion extending from a perimeter of the protrusion toward the sidewall (121-1) and hooked on the hook part.

4. The secondary battery of claim 3, wherein the edge extension part extends from a lower perimeter of the protrusion toward the sidewall (121-1).

5. The secondary battery of claim 3, wherein, as the top cap unit is pressed outward by the internal pressure of the case (120), which is generated by the liquefied gas electrolyte, the edge extension part is in close contact with the hook part.

6. The secondary battery of claim 1, wherein a positive electrode tab connected to the positive electrode is electrically connected to the top cap unit, and
a negative electrode tab connected to the negative electrode is electrically connected to the bottom unit.

7. A method for manufacturing the secondary battery of claim 1, the method comprising:
an electrode tab connection process of electrically connecting a positive electrode tab connected to the positive electrode of the electrode assembly (110) to the top cap unit and electrically connecting a negative electrode tab connected to the negative electrode to the bottom unit;
an electrode assembly (110) accommodation process of coupling the top cap unit to the upper opening of the body (121) and accommodating the electrode assembly (110) in an internal space of the body (121);
a bottom unit coupling process of coupling the bottom unit to the lower opening of the body (121);
an electrolyte injection process of injecting the liquefied gas electrolyte into the internal space of the body (121); and
a sealing coupling process, in which as the top cap unit is pressed outward by the internal pressure of the case (120), which is generated by the liquefied gas electrolyte, the top cap unit is hooked on the hook part and sealed and coupled to the upper opening.

8. The method of claim 7, wherein the top cap unit comprises:
a protrusion inserted into the upper opening of the body (121); and
an edge extension part that is a portion extending from a perimeter of the protrusion toward the sidewall (121-1) and hooked on the hook part, and
in the electrolyte injection process, in a state in which the edge extension part and the hook part are spaced apart from each other, the liquefied gas electrolyte is injected into the internal space of the body (121) through a spaced space (G1) between the edge extension part and the hook part.

9. The method of claim 8, wherein, in the sealing coupling process, as the top cap unit is pressed outward by the internal pressure of the case (120), which is generated by the liquefied gas electrolyte, the edge extension part is in close contact with the hook part so that the top cap unit is sealed and coupled to the upper opening.

10. The secondary battery of claim 3, further comprising a venting unit coupled to the top cap unit and configured to discharge an internal gas of the case (120) to the outside of the case (120) when an internal temperature of the case (120) is equal to or greater than a critical temperature.

11. The secondary battery of claim 10, wherein the venting unit comprises:
a base part disposed on a surface facing the hook part on a surface of the edge extension part; and
a variable part installed to face the hook part on the base part and changed in shape at the critical temperature or more.

12. The secondary battery of claim 11, wherein the variable part comprises a metal layer-bonded body in which a first metal layer stacked on the base part and a second metal layer stacked on the first metal layer to face a hook part and having a thermal expansion coefficient different from that of the first metal layer are bonded to each other.

13. The secondary battery of claim 12, wherein the metal layer-bonded body has one portion fixed to the base part and the other portion configured to press the hook part that is changed in shape at the critical temperature or more,
wherein force by which the hook part is pressed by the other portion of the metal layer-bonded body at the critical temperature or more is greater than force (F) by which the top cap unit is pressed outward by the internal pressure of the case (120), which is generated by the liquefied gas electrolyte.

14. The secondary battery of claim 13, wherein, when the other portion of the metal layer-bonded body presses the hook part, the edge extension part is spaced apart from the hook part to define a spaced space (G2),
wherein the internal gas of the case (120) is discharged to the outside of the case (120) through the spaced space.

15. The secondary battery of claim 12, wherein the base part is provided in a circular plate shape having a through-hole therein,
wherein the protrusion of the top cap unit is inserted into the through-hole.

16. The secondary battery of claim 15, wherein the variable part has a shape corresponding to the base part, and
the metal layer-bonded body is provided in four at an interval of 90 degrees on the base part.
